(19) Europäisches Patentamt
European Patent Office
Office européen des brevets

(11) **EP 1 998 522 B1**

(12) **FASCICULE DE BREVET EUROPEEN**

(45) Date de publication et mention
de la délivrance du brevet:
**17.03.2010 Bulletin 2010/11**

(51) Int Cl.:
**H04L 25/02** (2006.01) **H04L 27/26** (2006.01)
**H04B 1/10** (2006.01)

(21) Numéro de dépôt: **08157252.1**

(22) Date de dépôt: **30.05.2008**

(54) **Méthode d'estimation de caractéristiques de signaux OFDM**

Verfahren zur Merkmalbestimmung von OFDM-Signalen

Method for estimating OFDM signal parameters

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.05.2007 FR 0755394**

(43) Date de publication de la demande:
**03.12.2008 Bulletin 2008/49**

(73) Titulaire: **Commissariat à l'Energie Atomique**
**75015 Paris (FR)**

(72) Inventeur: **Jallon, Pierre**
**38100, GRENOBLE (FR)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
**DE-A1- 10 245 039     US-A1- 2007 009 011**

• **AKMOUCHE W ET AL: "OFDM parameters estimation a time approach" 29 octobre 2000 (2000-10-29), SIGNALS, SYSTEMS AND COMPUTERS, 2000. CONFERENCE RECORD OF THE THIRTY-FOURTH ASILOMAR CONFERENCE ON OCT. 29 - NOV. 1, 2000, PISCATAWAY, NJ, USA,IEEE, PAGE(S) 142-146 , XP010535349 ISBN: 0-7803-6514-3 * le document en entier ***

• **JALLON P ET AL: "Second-Order Based Cyclic Frequency Estimates: The Case of Digital Communication Signals" ACOUSTICS, SPEECH AND SIGNAL PROCESSING, 2006. ICASSP 2006 PROCEEDINGS. 2006 IEEE INTERNATIONAL CONFERENCE ON TOULOUSE, FRANCE 14-19 MAY 2006, PISCATAWAY, NJ, USA,IEEE, 14 mai 2006 (2006-05-14), pages IV-389, XP010931066 ISBN: 1-4244-0469-X**
• **MARCHAND P ET AL: "Multiple hypothesis modulation classification based on cyclic cumulants of different orders" 12 mai 1998 (1998-05-12), ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, PAGE(S) 2157-2160 , XP010279753 ISBN: 0-7803-4428-6 * Sections 2.2, 3.1 et 3.2, en particulier l'équation 9 ***
• **GARDNER W A: "Exploitation of spectral correlation in cyclostationary signals" FOURTH ANNUAL ASSP WORKSHOP ON SPECTRUM ESTIMATION AND MODELING (CAT. NO. 88CH2633-6) IEEE NEW YORK, NY, USA, 1988, pages 1-6, XP010078041**
• **ISHII H ET AL: "OFDM Blind Parameter Identification in Cognitive Radios" 11 septembre 2005 (2005-09-11), PERSONAL, INDOOR AND MOBILE RADIO COMMUNICATIONS, 2005. PIMRC 2005. IEEE 16TH INTERNATIONAL SYMPOSIUM ON BERLIN, GERMANY 11-14 SEPT. 2005, PISCATAWAY, NJ, USA,IEEE, PAGE(S) 700-705 , XP010926374 ISBN: 978-3-8007-29 * le document en entier ***

- **PENG LIU ET AL: "A blind time-parameters estimation scheme for OFDM in multi-path channel" 23 septembre 2005 (2005-09-23), WIRELESS COMMUNICATIONS, NETWORKING AND MOBILE COMPUTING, 2005. PROCEEDINGS. 2005 INTERNATIONAL CONFERENCE ON WUHAN, CHINA SEPT. 23-26, 2005, PISCATAWAY, NJ, USA,IEEE, PAGE(S) 222-227 , XP010856125 ISBN: 0-7803-9335-X * le document en entier ***
- **SHIOU-HONG CHEN ET AL: "Mode detection, synchronization, and channel estimation for DVB-T OFDM receiver" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 décembre 2003 (2003-12-01), pages 2416-2420, XP010678581 ISBN: 0-7803-7974-8**
- **CORDEIRO C ET AL: "IEEE 802.22: the first worldwide wireless standard based on cognitive radios" NEW FRONTIERS IN DYNAMIC SPECTRUM ACCESS NETWORKS, 2005. DYSPAN 2005. 2005 FIRST IEEE INTERNATIONAL SYMPOSIUM ON BALTIMORE, MD, USA 8-11 NOV. 2005, PISCATAWAY, NJ, USA, IEEE, 8 novembre 2005 (2005-11-08), pages 328-337, XP010855130 ISBN: 1-4244-0013-9**
- **JALLON ET AL: "Separation of instantaneous mixtures of cyclo-stationary sources" SIGNAL PROCESSING, ELSEVIER SCIENCE PUBLISHERS B.V. AMSTERDAM, NL, vol. 87, no. 11, 1 août 2007 (2007-08-01), pages 2718-2732, XP022163132 ISSN: 0165-1684**

**Description**

**DOMAINE TECHNIQUE**

La présente invention concerne le domaine de l'estimation aveugle ou semi-aveugle de caractéristiques de signaux OFDM. Elle trouve notamment application dans les systèmes radio opportunistes et dans le domaine de la réception de signaux OFDM.

**ÉTAT DE LA TECHNIQUE ANTÉRIEURE**

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB *(Ultra Wide Band).* La seconde consiste à utiliser de manière opportuniste une partie du spectre ponctuellement ou temporairement inoccupée, c'est la voie dite de radio opportuniste (ou *Cognitive Radio).* On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Le principe de la radio opportuniste a été notamment retenu pour le développement des réseaux sans fil à longue portée encore dénommés WRAN *(Wireless Régional Area Network).* Ces réseaux font actuellement l'objet d'un processus de standardisation au sein du groupe de travail de IEEE 802.22. Plus précisément, cette norme en cours d'élaboration propose d'utiliser de manière opportuniste les bandes UHF et VHF vacantes pour réaliser une transmission sans fil point à point dans un réseau WRAN. Il est en particulier prévu que les bandes UHF allouées au système de télévision à diffusion par voie terrestre DVB-T (*Digital Video Broadcast-Terrestrial*) puissent être utilisées à cette fin. La norme DVB-T fait appel à une modulation OFDM (*Orthogonal Frequency Division Multiplexing*) pour transmettre des flux vidéo/audio compressés. On trouvera une introduction à la norme IEEE 802.22 dans l'article de C. Cordeiro et al. intitulé « IEEE 802.22 : an introduction to the first wireless standard base on cognitive radios », publié dans Journal of Communications, Vol. 1, N˚1, Avril 2006, pp. 38-47.

Avant de pouvoir émettre dans une bande UHF donnée, il est nécessaire qu'un émetteur du réseau WRAN puisse déterminer si un signal OFDM est présent dans cette bande. Or, un simple détecteur de puissance, tel que préconisé dans l'article précité ne permet pas d'obtenir cette information de manière fiable, en particulier pour un faible rapport signal à bruit.

En outre, les terminaux d'un système radio opportuniste peuvent eux-mêmes utiliser une modulation OFDM, comme c'est d'ailleurs le cas pour les réseaux WRAN. Lors d'un changement de bande de fréquence, par exemple suite à l'indisponibilité de la bande couramment utilisée, le récepteur doit connaître la nouvelle bande et, de manière plus générale, les nouveaux paramètres de transmission utilisés par l'émetteur. Si le système radio opportuniste autorise un changement de fréquence à l'initiative seule de l'émetteur, le récepteur devra procéder à une estimation aveugle ou semi-aveugle de ces paramètres. Par estimation aveugle, on entend que le récepteur n'a aucune connaissance *a priori* de ces paramètres. Par estimation semi-aveugle on entend que le récepteur n'a une connaissance *a priori* que de certains de ces paramètres seulement. Par paramètres de transmission, nous entendons les paramètres nécessaires à la démodulation d'un symbole OFDM, par exemple la longueur du symbole OFDM, la longueur du préfixe, le débit des symboles d'information.

Une méthode d'estimation aveugle de paramètres de transmission OFDM pour un système radio opportuniste est connue de l'article de H. Ishii et al. intitulé « OFDM blind parameter indentification in cognitive radios » publié dans PIRMC 2005, IEEE 16th International Symposium on Personal, Indoor and Mobile Communications, pp. 700-705. Il est notamment proposé d'estimer la longueur des trames de symboles OFDM ainsi que leur longueur utile grâce aux pics de la fonction d'autocorrélation du signal reçu. De manière similaire, l'article de P. Liu et al. intitulé « A blind time-parameters estimation scheme for OFDM in multi-path channel » publié dans Proc. 2005 Int'l Conférence on Wireless Communications Networking and Mobile Computing, 23-26 Sept. 2005, Vol. 1, pp. 222-227 donne une méthode d'estimation aveugle de la longueur totale d'un symbole OFDM et de sa longueur utile à partir des pics de ladite fonction d'autocorrélation.

L'article d'A. Walter et al. intitulé « OFDM parameters estimation, a time approach » publié dans Conference Record of the 34 Asilomar Conference, Signals, Systems and Computers, 29 Oct. 2000, pp. 142-146 décrit une méthode d'estimation de la durée d'un symbole OFDM à partir de la transformée de Fourier de la fonction d'autocorrélation cyclique du signal reçu. Cette durée n'est estimée pour un écart temporel de corrélation et une pluralité de fréquences cycliques.

L'article de P. Jallon et al. intitulé « Second order based cyclic frequency estimates : the case of digital communication signals », publié dans Proc. of ICASSP 2006 IEEE Conf., Toulouse, 14-19 May 2006, pages IV-339 à IV-392, décrit une méthode d'estimation de fréquences cycliques dans un moment de second ordre d'un signal à bande limitée. Cette estimation fait appel à une sommation quadratique sur une pluralité d'écarts temporels de corrélation.

Les méthodes d'estimation précitées ne donnent toutefois pas de résultat fiable lorsque le rapport signal à bruit est faible.

Un premier but de la présente invention est de proposer une méthode permettant de déterminer avec une grande fiabilité si un signal OFDM est présent ou absent dans une bande de fréquence d'intérêt et ce, même dans des conditions de faible rapport signal à bruit.

Un second but de la présente invention est de proposer une méthode d'estimation aveugle ou semi-aveugle de paramètres de transmission d'un signal OFDM, qui soit fiable, même dans des conditions de faible rapport signal à bruit.

## EXPOSÉ DE L'INVENTION

La présente invention est définie par l'objet de la revendication 1 ci-jointe. Des modes de réalisation avantageux sont définis dans les revendications dépendantes.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente de manière schématique un signal OFDM ;
La Fig. 2 donne une interprétation graphique d'une fonction de discrimination utile à la mise en oeuvre de l'invention ;
La Fig. 3 représente des zones du support de la fonction d'autocorrélation intervenant dans le calcul de la fonction de discrimination, pour différentes fréquences cycliques ;
La Fig. 4 représente une méthode de détermination d'une caractéristique de signal OFDM selon un premier mode de réalisation de l'invention ;
La Fig. 5 représente une méthode de détermination d'une caractéristique de signal OFDM selon un second mode de réalisation de l'invention.

## EXPOSÉ DÉTAILLÉ DE MODES DE RÉALISATION PARTICULIERS

Nous considérerons dans la suite le terminal d'un système radio souhaitant déterminer une caractéristique d'un signal OFDM. Par caractéristique on entendra ici non seulement les paramètres de transmission OFDM, tels que définis plus haut, mais aussi, de manière plus fondamentale, la simple information de présence/absence d'un signal OFDM dans une bande donnée. Le terminal en question peut être par exemple un émetteur d'un réseau WRAN recherchant une bande disponible dans le spectre DVB-T, ou un récepteur OFDM d'un réseau radio opportuniste ou non.

De manière générale, un signal OFDM peut s'écrire de la manière suivante, après réception en bande de base :

$$s_a(t) = \frac{\sqrt{E}}{N} \sum_k g\big(t - k(N+D)T_c\big)e^{2i\pi\Delta ft} \cdot \sum_{n=0}^{N-1} a_{n+kN} e^{2i\pi\frac{n}{NT_c}(t-DT_c-k(N+D)T_c)}$$

$$(1)$$

où $E$ est la puissance du signal, $N$ est le nombre de porteuses du multiplex OFDM, $a_n$ sont les symboles d'information appartenant à un alphabet de modulation, typiquement BPSK, QPSK ou QAM, $1/T_c$ est le débit des symboles d'information, D est la taille du préfixe cyclique exprimée en nombre de symboles d'information, g(t) est une impulsion de mise en forme des symboles OFDM ayant un support temporel $[0,(N+D)T_c]$ destiné à apodiser le spectre du signal, $\Delta f$ est un résidu de porteuse dû à l'imperfection de la démodulation RF.

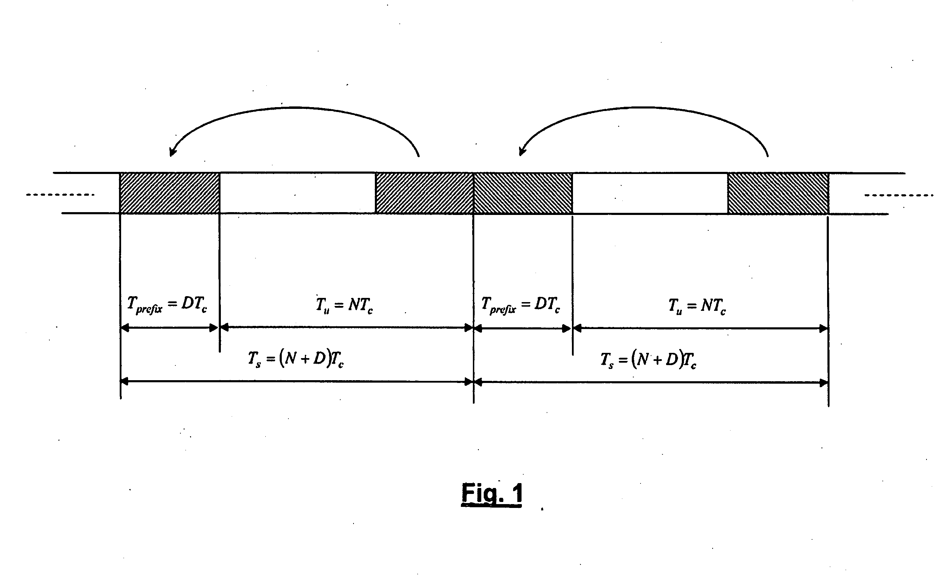

On a représenté de manière schématique un signal OFDM en Fig. 1. Il est constitué d'une séquence de symboles OFDM de durée totale $(N+D)T_c$, chaque symbole présentant une durée utile $NT_c$ et un intervalle de garde de durée $T_{prefix} = DT_c$, dans lequel se trouve le préfixe cyclique. On rappelle que, de manière classique, le préfixe cyclique est une copie de la fin du symbole OFDM à l'intérieur de l'intervalle de garde, ce dernier ayant pour but d'éliminer l'interférence inter-symbole (ISI).

Dans l'expression (1) nous avons fait abstraction de la réponse du canal de transmission. En pratique, si le canal est de type multi-trajet, le signal OFDM reçu peut s'écrire :

$$s'_a(t) = \sum_{\ell=0}^{L-1} \lambda_\ell s_a(t - \tau_\ell) + w(t) \qquad (2)$$

où L est le nombre de trajets du canal, les $\tau_\ell$ et $\lambda_\ell$ sont les temps de propagation du signal et les atténuations du signal sur les différents trajets, w(t) est un bruit additif blanc gaussien centré.

La fonction d'autocorrélation du signal reçu peut alors s'exprimer, en retenant la formulation (1) :

$$Rs_a(t,\tau) = E\left\{s_a(t)s_a^*(t-\tau)\right\} \qquad (3)$$

ou E{.} désigne l'espérance mathématique. On peut alors montrer que :

$$Rs_a(t,\tau) = \frac{E}{N}\delta(\tau - NT_c)e^{2i\pi\Delta f\tau}\sum_k g(t - k(N+D)T_c)g(t-\tau-k(N+D)T_c) + \frac{E}{N}\delta(\tau)$$

$$(4)$$

où l'on a noté $\delta(.)$ la distribution de Dirac. On remarquera que l'expression (4) ne présente, hormis le cas trivial $\tau=0$, des valeurs non nulles que pour un décalage $\tau=NT_c$, ce qui se comprend dans la mesure où le signal OFDM ne présente pas de périodicité autre que celle due à la répétition du préfixe cyclique. Pour cette valeur de décalage :

$$Rs_a(t,NT_c) = \frac{E}{N}e^{2i\pi\Delta f\tau}\sum_k g(t - k(N+D)T_c).g(t - NT_c - k(N+D)T_c)$$

$$(5)$$

On notera que la fonction $Rs_a(t,NT_c)$ est invariante par translation de $(N+D)T_c$ et, par conséquent le signal $s_a$ est cyclostationnaire. En d'autres termes, le spectre de $Rs_a(t,NT_c)$ est un peigne de raies de périodicité $\dfrac{1}{(N+D)T_c}$.

Lorsque le signal reçu est issu d'un canal multi-trajet, c'est-à-dire qu'il peut s'exprimer sous la forme (2), les conclusions précédentes restent valables, le spectre de raies étant alors simplement modulé par la fonction de transfert du canal.

Dans tous les cas, la fonction d'autocorrélation $Rs_a(t,NT_c)$ peut être décomposée selon la série de Fourier suivante :

$$Rs_a(t,NT_c) = \sum_k r_a^k e^{2i\pi\frac{kt}{(N+D)T_c}} \qquad (6)$$

En pratique, du fait de la taille finie de la fenêtre de corrélation, la fonction $Rs_a(t,\tau)$ n'a pas un support en $\tau$ simplement réduit à la droite $\tau=NT_c$ mais présente un étalement selon l'axe des $\tau$. Toutefois, le remplacement de la fonction $\delta(\tau-NT_c)$ par une fonction $h(\tau)$ quelconque conduit encore à une fonction d'autocorrélation périodique, et de période $(N+D)T_c$. Quelle que soit la valeur de $\tau$, la fonction $Rs_a(t,\tau)$ peut se décomposer selon une série de Fourier :

$$Rs_a(t,\tau) = \sum_k r_a^k(\tau) e^{2i\pi \frac{kt}{(N+D)T_c}} \qquad (7)$$

où les coefficients de Fourier $r_a^k(\tau)$, encore dénommés coefficients de corrélation cyclique, sont fonction du décalage temporel $\tau$. Les fréquences $\dfrac{k}{(N+D)T_c}$ sont dénommées fréquences cycliques.

Alors que les méthodes d'estimation de l'état de la technique procèdent en deux étapes, en estimant tout d'abord la longueur utile $T_u = NT_c$ et ensuite la longueur totale $T_s = (N + D)T_c$ des symboles OFDM, on effectue avantageusement une estimation conjointe de ces paramètres, plus résistante au bruit.

Pour ce faire, on considère à nouveau la fonction d'autocorrélation du signal reçu, $Rs_a(t,\tau)$, et on introduit les coefficients de corrélation cyclique $\rho_a^{k/(\alpha+\beta)}(\tau)$ définis par :

$$\rho_a^{k/(\alpha+\beta)}(\tau) = \lim_{T\to\infty} \frac{1}{T}\int_0^T Rs_a(t,\tau) e^{-2i\pi\frac{kt}{\alpha+\beta}} = \left\langle Rs_a(t,\tau) e^{-2i\pi\frac{kt}{\alpha+\beta}} \right\rangle_t$$

$$(8)$$

où les $\dfrac{k}{\alpha+\beta}$, $k\in Z$ sont les fréquences cycliques et $\langle.\rangle_t$ désigne la moyenne temporelle. La fonction d'autocorrélation se décompose alors de la manière suivante :

$$Rs_a(t,\tau) = \sum_k \rho_a^{k/(\alpha+\beta)}(\tau) e^{2i\pi\frac{kt}{\alpha+\beta}} \qquad (9)$$

On définit une fonction de discrimination par :

$$J(\alpha,\beta) = \sum_{k=0}^{K-1} \left| \rho_a^{k/(\alpha+\beta)}(\alpha) \right|^2 \qquad (10)$$

où $K$ est une valeur entière strictement supérieure à 1, indiquant le nombre de fréquences cycliques que l'on prend en compte dans l'estimation. Cette fonction de discrimination permet de déterminer si, pour un écart temporel $\tau=\alpha$ donné, la fonction d'autocorrélation présente en fonction du temps des pics se répétant avec une périodicité $\alpha + \beta$.

En présence d'un signal OFDM de paramètres $T_u= NT_c$ et $T_s=(N+D)T_c$, la fonction de discrimination $J(\alpha,\beta)$ présentera un maximum $J$ pour $\alpha=NT_c$ et $\beta=DT_c$. Ce maximum sera sensiblement supérieur au maximum $J_0$ qui serait atteint par la fonction $J(\alpha,\beta)$ en absence de signal OFDM.

La fonction de discrimination $J(\alpha,\beta)$ permet à la fois de déterminer si un signal OFDM est présent dans le signal reçu et, le cas échéant, d'en estimer les paramètres temporels. Cette estimation peut être aveugle ou semi-aveugle : si le terminal connaît a priori un ou plusieurs paramètre(s), l'estimation des autres paramètres s'en trouvera facilitée. Par exemple, si la longueur $T_u$ des symboles OFDM est connue du terminal, la fonction de discrimination sera simplement à maximiser selon $\beta$, à savoir :

$$J(T_u,\beta) = \sum_{k=0}^{K-1} \left| \rho_a^{k/(T_u+\beta)}(T_u) \right|^2 \qquad (11)$$

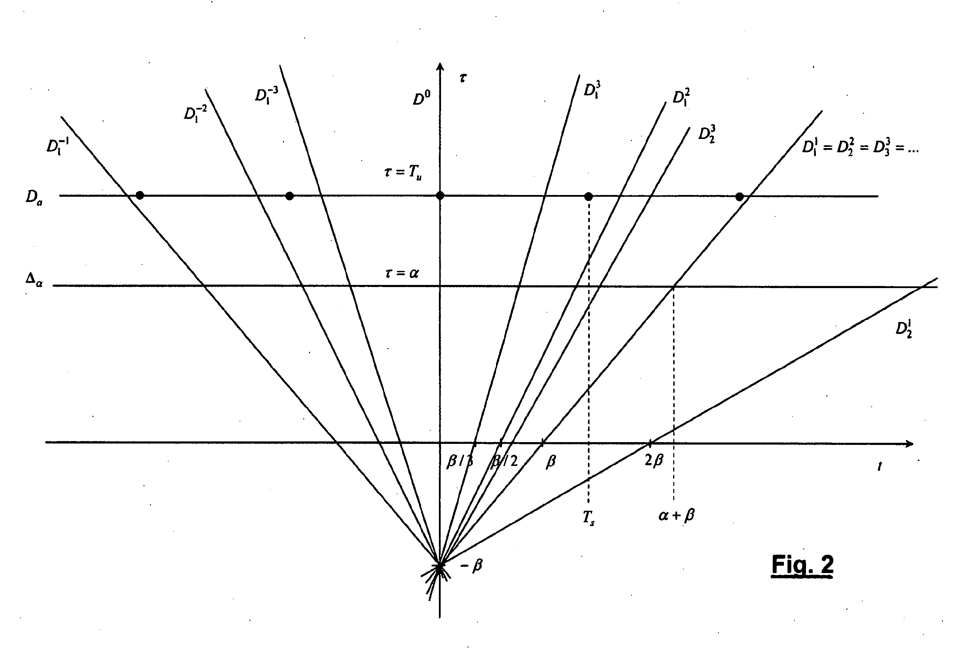

La Fig. 2 donne une interprétation graphique de la fonction de discrimination $J(\alpha,\beta)$.

On a représenté sur la figure le plan $(t,\tau)$ dans lequel est définie la fonction d'autocorrélation $Rs_a(t,\tau)$.

Dans le cas idéal d'un signal OFDM $s_a$ non bruité, ayant des paramètres $T_u=NT_c$ et $T_s=(N+D)T_c$ bien définis, la fonction d'autocorrélation $Rs_a(t,\tau)$ a un support limité à des points de périodicité $T_s$ sur la droite horizontale $D_a$ d'équation $\tau = T_u$.

En règle générale, la fonction d'autocorrélation du signal reçu possède un support quelconque dans lequel se trouvent un certain nombre de pics. La fonction de discrimination permet de tester si cette distribution de pics est révélatrice de la présence d'un signal OFDM et, le cas échéant, d'en déterminer les paramètres temporels.

Les points du plan correspondant à la fréquence cyclique $\dfrac{k}{\alpha+\beta}$ , $k \in \{-K,..,0,..,K\}$ constituent un réseau périodique de droites $D_n^k$ de pentes $\pm k/n$, où $n$, entier strictement positif, est l'indice de la période selon l'axe t. En effet, pour une valeur $\alpha$ donnée, les points correspondant à cette fréquence cyclique appartiennent à la droite horizontale $\Delta_\alpha$ d'équation $\tau = \alpha$ et ont pour abscisses $\pm n\dfrac{\alpha+\beta}{k}$ .

Dans le cas particulier de la fréquence nulle $k=0$, le réseau de droites $D_n^0$ est dégénéré et se réduit à la droite verticale $D^0$ d'équation $t = 0$.

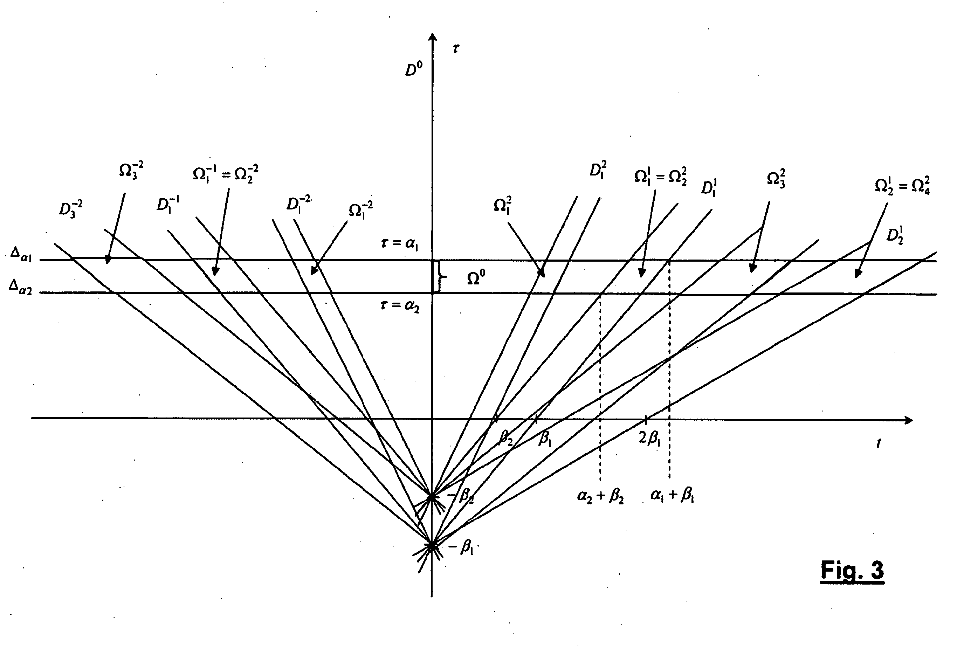

On suppose maintenant que l'on recherche le maximum J de la fonction de discrimination $J(\alpha,\beta)$ sur une plage définie par les intervalles de variation $[\alpha_1,\alpha_2]$ et $[\beta_1,\beta_2]$. Nous avons illustré en Fig. 3 les zones $\Omega_n^k$ du plan $(t,\tau)$ qui contribuent à $J(\alpha,\beta)$ pour les premières valeurs de $k$ ($k = 0,1,2$). On remarquera que la méthode d'estimation du paramètre $\alpha$ selon l'état de la technique ne prend en compte que la zone $\Omega^0$ dans la recherche du pic de corrélation alors que la méthode d'estimation selon la présente invention prend en compte les pics de corrélations dans l'ensemble des zones $\Omega_n^k$ , $k = 0,..,K - 1$ ; $n = 1,2,...$

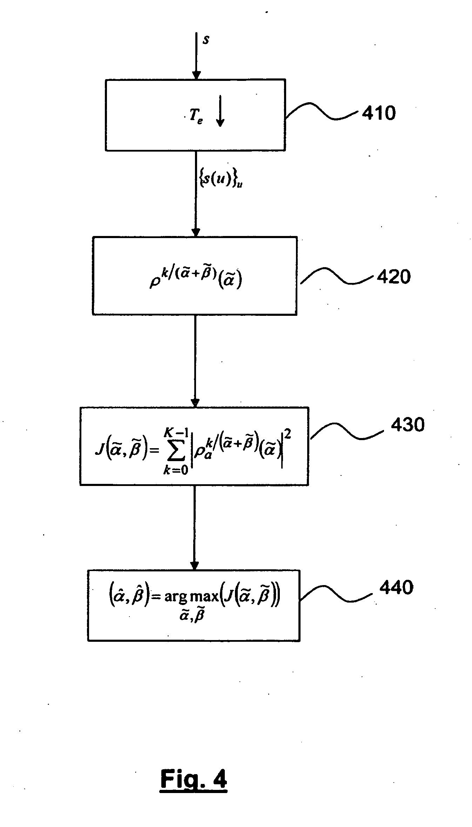

La Fig. 4 représente l'organigramme d'une méthode d'estimation d'au moins une caractéristique de transmission d'un signal OFDM selon un premier mode de réalisation de l'invention. Plus précisément, ce mode de réalisation permet d'estimer de manière conjointe les paramètres temporels du signal OFDM, tels que la longueur utile et la longueur de préfixe d'un symbole OFDM.

A la première étape 410, on échantillonne le signal reçu $s$, à la fréquence des symboles d'information $1/T_c$, si on la connaît, ou à la fréquence de Nyquist sinon. Le signal s est le signal en bande de base, par exemple issu d'une démodulation en bande de base du signal RF d'une bande UHF d'intérêt.

On obtient ainsi une séquence d'échantillons $\{s(u)\}_U$.

A l'étape 420, on calcule les coefficients de corrélation cyclique du signal reçu à l'aide de l'expression (8), soit:

$$\rho^{k/(\alpha+\beta)}(\alpha) = \left\langle Rs(t,\alpha)e^{-2i\pi\frac{kt}{\alpha+\beta}} \right\rangle_t \qquad (12)$$

En pratique, on calcule la fonction d'autocorrélation $Rs(t,\alpha)$ sur une longueur de fenêtre finie $U,$ à partir du signal échantillonné, soit :

$$\rho^{k/(\tilde{\alpha}+\tilde{\beta})}(\tilde{\alpha}) = \frac{1}{U}\sum_{u=0}^{U-1}s(u)s^*(u-\tilde{\alpha})e^{-2i\pi\frac{k}{\tilde{\alpha}+\tilde{\beta}}} \qquad (13)$$

dans lequel on a défini les valeurs réduites $\tilde{\alpha} = \dfrac{\alpha}{T_e}$ et $\tilde{\beta} = \dfrac{\beta}{T_e}$ où $T_e$ est la période d'échantillonnage.

A l'étape 430, on déduit la fonction de discrimination à partir de l'expression (10), soit :

$$J(\tilde{\alpha},\tilde{\beta}) = \sum_{k=0}^{K-1}\left|\frac{1}{U}\sum_{u=0}^{U-1}s(u)s^*(u-\tilde{\alpha})e^{-2i\pi\frac{k}{\tilde{\alpha}+\tilde{\beta}}}\right|^2 \qquad (14)$$

L'expression (14) peut s'écrire de manière équivalente, par simple translation de $\alpha$ :

$$J(\tilde{\alpha},\tilde{\beta}) = \sum_{k=0}^{K-1}\left|\frac{1}{U}\sum_{u=0}^{U-1}s^*(u)s(u+\tilde{\alpha})e^{-2i\pi\frac{k}{\tilde{\alpha}+\tilde{\beta}}}\right|^2 \qquad (15)$$

On notera que la sommation sur les fréquences cycliques en (14) et (15) est limitée aux fréquences positives de 0 à $K$. Alternativement, la sommation peut porter sur les fréquences négatives, ou à la fois sur les fréquences négatives et positives, par exemple de $-K$ à $K$, sans pour autant sortir du cadre de l'invention.
A l'étape 440, on détermine les paramètres $\hat{\alpha}$ et $\hat{\beta}$ qui maximisent la fonction de discrimination, soit :

$$(\hat{\alpha},\hat{\beta}) = \mathop{\arg\max}_{\substack{\tilde{\alpha}\in[\tilde{\alpha}_1,\tilde{\alpha}_2] \\ \tilde{\beta}\in[\tilde{\beta}_1,\tilde{\beta}_2]}}\left(J(\tilde{\alpha},\tilde{\beta})\right) \qquad (16)$$

$\hat{\alpha}$ et $\hat{\beta}$ sont respectivement l'estimation de la longueur utile et de la longueur de préfixe du symbole OFDM.
Il convient de noter que le calcul de la fonction de discrimination et de son maximum peut être à un ensemble discret de valeur de paramètres. Ce sera en pratique souvent le cas, car les systèmes primaires à tester n'utilisent qu'un nombre restreint de paramètres possibles.

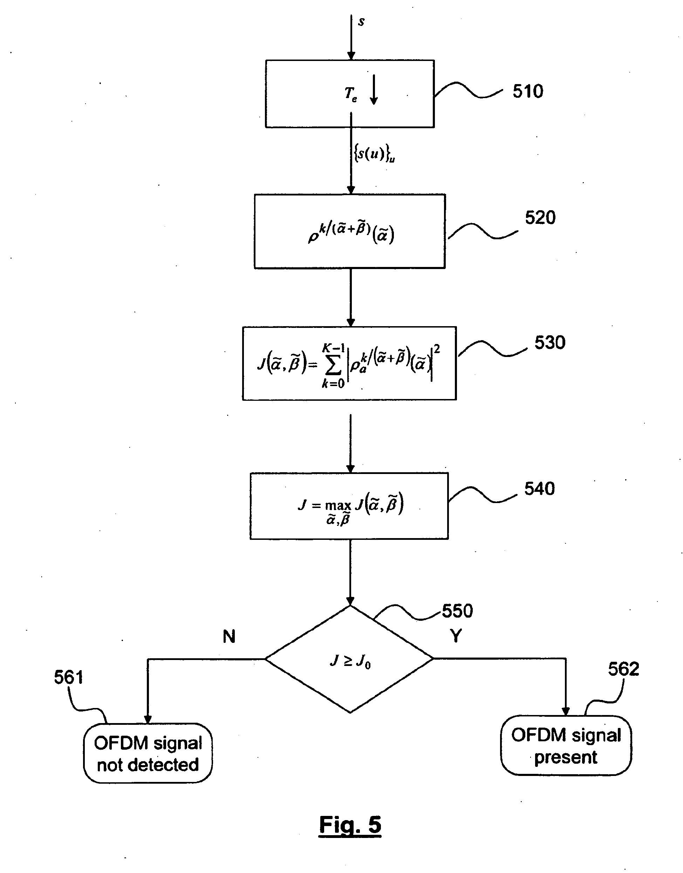

La Fig. 5 représente l'organigramme d'une méthode d'estimation d'une caractéristique de transmission d'un signal OFDM selon un second mode de réalisation de l'invention. Plus précisément, ce mode de réalisation permet de déterminer si un signal OFDM est présent dans une bande de fréquence déterminée.
A l'étape 510, on procède à l'échantillonnage du signal reçu.
A l'étape 520, on calcule les coefficients de corrélation cyclique.
A l'étape 530, plusieurs cas sont envisageables :

- si l'on connaît déjà les paramètres $T_u=NT_c$ et $T_{prefix}=DT_c$ il suffira de calculer la fonction $J(\tilde{\alpha},\tilde{\beta})$ pour le couple de valeurs $\tilde{\alpha} = N$, $\tilde{\beta} = D$. On choisit alors de préférence une longueur de troncation spectrale $K<N/D$ dans la fonction de discrimination ;
- si l'on connaît la valeur de l'un des paramètres, par exemple, il suffira de calculer la fonction $J(\tilde{\alpha},\tilde{\beta})$ pour le paramètre restant ou pour un ensemble de valeurs possibles du paramètre restant ;
- si l'on sait que le couple de paramètres $(\tilde{\alpha},\tilde{\beta})$ appartient nécessairement à un ensemble de valeurs discrètes, il suffira de calculer $J(\widetilde{\alpha},\widetilde{\beta})$ pour ces valeurs là ;

- en absence d'information sur $\widetilde{\alpha}$ et $\widetilde{\beta}$, on calculera la fonction $J(\widetilde{\alpha},\widetilde{\beta})$ sur une plage de valeurs définie par des intervalles $[\widetilde{\alpha}_1,\widetilde{\alpha}_2]$ et $[\widetilde{\beta}_1,\widetilde{\beta}_2]$ d'intérêt.

On notera que lorsque le calcul de $J(\widetilde{\alpha},\widetilde{\beta})$ ne porte que sur certaines valeurs de $\widetilde{\alpha}$ et/ou $\widetilde{\beta}$, les coefficients de corrélation cyclique n'auront à être calculés que pour ces valeurs là.

A l'étape 540, hormis le cas où les paramètres $\widetilde{\alpha}$ et $\widetilde{\beta}$ sont tous deux connus, on calcule le maximum J de la fonction $J(\widetilde{\alpha},\widetilde{\beta})$ sur la plage ou l'ensemble discret de valeurs de paramètres.

A l'étape 550, on compare la valeur J à un seuil prédéterminé $J_0$. Si $J \geq J_0$ on en conclut qu'un signal OFDM est présent (562). Dans le cas contraire, aucun signal OFDM, à tout le moins aucun signal OFDM dont les paramètres temporels sont testés, n'est présent dans la bande de fréquence considérée (561).

On détermine avantageusement un seuil en fonction du rapport $\dfrac{U}{\sigma^4}$, où $\sigma^2$ est la variance de bruit. Pour les faibles rapports signal à bruit, on pourra utiliser l'approximation $\sigma^2 = \dfrac{1}{U}\sum_{u=0}^{U-1}|x(u)|^2$. On peut montrer que si l'on choisit $J_0$ vérifiant l'équation :

$$J_0 - \frac{\sigma^4}{U}\ln\left(\sum_{j=0}^{K-1}\left(\frac{J_0 U}{\sigma^4}\right)^j \frac{1}{j!}\right) = 3{,}91\frac{\sigma^4}{U} \qquad (17)$$

la probabilité de mauvaise détection c'est-à-dire la probabilité que l'on conclut à une présence de signal OFDM alors qu'il est absent tend vers 2% lorsque U tend vers l'infini.

Cette méthode de détermination de présence/absence de signal OFDM peut être utilisée par les systèmes radio opportunistes pour décider s'ils peuvent transmettre dans une bande donnée, notamment un bande UHF du système DVB-T.

Cette même méthode peut être utilisée pour des opérations de police spectrale, notamment pour détecter une occupation illicite du spectre.

Enfin, les deux modes de réalisation peuvent être utilisés consécutivement, le second mode pour déterminer dans un premier temps si un signal OFDM est effectivement présent dans le signal reçu, puis le premier mode pour en déterminer ses paramètres temporels.

Ces deux modes de réalisation donnent des résultats satisfaisants en absence de signal interférent. On appelle ici signal interférent un signal se manifestant par une raie interférente dans le spectre du signal reçu transposé en bande de base, typiquement dans une bande [-4MHz, +4MHz]. Dans une telle situation, en fonction de la puissance de la raie interférente, le résultat de la méthode de détermination selon l'invention peut être erronée.

Afin de se prémunir contre ce type d'erreur, il est prévu de filtrer préalablement le signal reçu avant de calculer les coefficients de corrélation cyclique.

Selon une première variante, le filtre utilisé est un filtre passe-bande centré autour de la fréquence porteuse en bande RF ou, de manière équivalente, autour de 0 en bande de base. Dans le cas de bandes UHF, pour la détection de signaux DVB-T, on choisira avantageusement un filtre passe-bande de largeur 4 MHz centré sur la fréquence centrale du canal d'intérêt ou sur 0 en bande de base. Cette largeur de bande est en pratique suffisante pour ne pas altérer la détermination de la caractéristique du signal DVB-T par la méthode selon l'invention. De manière générale, on choisira un filtre passe bande éliminant la ou les raie(s) interférente(s).

Selon une seconde variante, le filtre sera un filtre coupe-bande(s) centré sur la ou les bande(s) à éliminer.

Selon une troisième variante, on pourra effectuer un filtrage du signal échantillonné au moyen d'un filtre de décimation. On choisira alors convenablement le taux de décimation pour éliminer les raies interférentes. Par exemple, si le signal en bande base est dans la bande [-4MHz 4MHz] et a été échantillonné à la fréquence de Nyquist (8MHz), et si la raie interférente a été déterminée comme étant à -2MHz, on choisira un taux de décimation de 4. Le signal échantillonné ainsi décimé est alors dans la bande [-1MHz 1MHz] et ne satisfait plus le critère de Nyquist. Cependant, le repliement de la raie interférente due au sous échantillonnage se fait sur la fréquence nulle. Plus généralement si la raie interférente se trouve à $\pm f_{int}$ dans la bande [-$B$,+$B$] du signal en bande de base, on échantillonnera à la fréquence $f_{int}$, c'est-à-dire que l'on effectuera un filtrage par décimation au taux $2B/f_{int}$ pour obtenir en définitive un signal dans la

bande [$-f_{\text{int}}, +f_{\text{int}}$].

Le repliement des images de la raie interférente sur la fréquence nulle n'affecte pas les propriétés de cyclostationnarité du signal.

Pour déterminer la ou les raie(s) interférente(s), on calcule tout d'abord la densité spectrale du signal reçu, par exemple en calculant le carré du module de la transformée de Fourier du signal (FFT). On détermine ensuite la moyenne $m_s$ et la variance $\sigma_s$ de ce module et l'on identifie les points $P_v$ du spectre pour lesquels la densité spectrale excède $m_s + \lambda \sigma_s$ où $\lambda$ est un réel supérieur à 1, typiquement égal à ou de l'ordre de 3. Pour chacun de ces points $P_v$, on recherche à droite et à gauche de ces points, les points dont la densité spectrale est sensiblement égale à la moyenne $m_s$, soit $P_v^-$ et $P_v^+$. On filtre ensuite le signal reçu par une cascade de filtres élémentaires réjectant respectivement les différentes bandes $\left[ P_v^-, P_v^+ \right]$, ou de manière équivalente par un filtre unique dont la fonction de transfert est la convolution des fonctions de transfert de ces filtres élémentaires.

Quelle que soit la variante du filtre, les coefficients de corrélation cyclique sont calculés à partir du signal reçu ainsi filtré.

**Revendications**

1. Méthode de détermination d'au moins une caractéristique d'un signal OFDM au sein d'un signal reçu, dans laquelle on calcule (420, 520) une pluralité de coefficients de corrélation cyclique du signal reçu pour un écart temporel de corrélation et une pluralité de fréquences cycliques, **caractérisée en ce que** :

   - on calcule (430, 530) une fonction de discrimination égale à la somme quadratique desdits coefficients de corrélation cyclique ;
   - on déduit (440, 561, 562) ladite caractéristique du signal OFDM en fonction d'au moins une valeur de ladite fonction de discrimination.

2. Méthode de détermination selon la revendication 1, **caractérisée en ce que** la fonction de discrimination est calculée selon l'expression :

$$J\left(\widetilde{\alpha}, \widetilde{\beta}\right) = \sum_{k=0}^{K-1} \left| \frac{1}{U} \sum_{u=0}^{U-1} s(u) s^*(u - \widetilde{\alpha}) e^{-2i\pi \frac{k}{\widetilde{\alpha} + \widetilde{\beta}}} \right|^2$$

où $s(u)$, $u = 1,..,U$ sont des échantillons du signal reçu, échantillonnés à la période d'échantillonnage $T_e$, $\widetilde{\alpha}$ est ledit écart temporel exprimé en période(s) d'échantillonnage, $\widetilde{\beta}$ est une durée de préfixe cyclique, exprimée en période (s) d'échantillonnage, la sommation sur $k$ étant prise sur ladite pluralité de fréquences cycliques.

3. Méthode de détermination selon la revendication 1, **caractérisée en ce que** la fonction de discrimination est calculée selon l'expression :

$$J\left(\widetilde{\alpha}, \widetilde{\beta}\right) = \sum_{k=0}^{K-1} \left| \frac{1}{U} \sum_{u=0}^{U-1} s^*(u) s(u + \widetilde{\alpha}) e^{-2i\pi \frac{k}{\widetilde{\alpha} + \widetilde{\beta}}} \right|^2$$

où $s(u)$, $u$ = 1,..,$U$ sont des échantillons du signal reçu, échantillonnés à la période d'échantillonnage $T_e$, $\tilde{\alpha}$ est ledit écart temporel exprimé en période(s) d'échantillonnage, $\tilde{\beta}$ est une durée de préfixe cyclique, exprimée en période (s) d'échantillonnage, la sommation sur $k$ étant prise sur ladite pluralité de fréquences cycliques.

4. Méthode de détermination selon l'une des revendications précédentes, **caractérisée en ce que** ladite caractéristique est l'information d'absence/présence dudit signal OFDM.

5. Méthode de détermination selon la revendication 2 ou 3 et la revendication 4, **caractérisée en ce que** la durée utile et la durée de préfixe cyclique des symboles OFDM du signal OFDM étant connues a priori, la fonction de discrimination est calculée pour la valeur de $\tilde{\alpha}$ égale à ladite durée utile et la valeur de $\tilde{\beta}$ régale à ladite valeur de durée de préfixe connues, exprimées en période(s) d'échantillonnage.

6. Méthode de détermination selon la revendication 2 ou 3 et la revendication 4, **caractérisée en ce que** la fonction de discrimination est calculée pour un ensemble de valeurs discrètes possibles de $\tilde{\alpha}$ et/ou de $\tilde{\beta}$.

7. Méthode de détermination selon la revendication 2 ou 3 et la revendication 4, **caractérisée en ce que** la fonction de discrimination est calculée pour un intervalle de valeurs de $\tilde{\alpha}$ et/ou de $\tilde{\beta}$.

8. Méthode de détermination selon la revendication 5, **caractérisée en ce que** l'on compare ladite valeur de la fonction de discrimination à une valeur de seuil prédéterminée et que l'on conclut à la présence d'un signal OFDM si elle excède la valeur de seuil et à l'absence de signal OFDM sinon.

9. Méthode de détermination selon l'une des revendications 6 à 7, **caractérisée en ce que** l'on détermine le maximum de la fonction de discrimination ainsi calculée, que l'on compare ce maximum à une valeur de seuil prédéterminée et que l'on conclut à la présence d'un signal OFDM si ce maximum excède la valeur de seuil et à l'absence de signal OFDM sinon.

10. Méthode de détermination selon la revendication 8 ou 9, **caractérisée en ce que** la valeur de seuil prédéterminée est calculée en fonction du rapport $\dfrac{U}{\sigma^4}$ où $K$ est le nombre de fréquences cycliques et $\sigma^2 = \dfrac{1}{U}\sum\limits_{u=0}^{U-1}|x(u)|^2$.

11. Méthode de détermination selon l'une des revendications 1 à 3, **caractérisée en ce que** ladite caractéristique est un paramètre temporel du signal OFDM.

12. Méthode de détermination selon la revendication 11, **caractérisée en ce que** ledit paramètre temporel est la longueur utile, la longueur de préfixe cyclique ou la longueur totale des symboles OFDM dudit signal OFDM.

13. Méthode de détermination selon la revendication 2 ou 3 et de la revendication 12, **caractérisée en ce que** l'on calcule le maximum de la fonction de discrimination pour une pluralité de valeurs discrètes possibles de $\tilde{\alpha}$ et/ou de $\tilde{\beta}$.

14. Méthode de détermination selon la revendication 2 ou 3 et de la revendication 12. **caractérisée en ce que** l'on calcule le maximum de la fonction de discrimination pour un intervalle de valeurs de $\tilde{\alpha}$ et/ou de $\tilde{\beta}$.

15. Méthode de détermination selon la revendication 13 ou 14, **caractérisée en ce que** l'on estime conjointement la longueur utile et la longueur de préfixe des symboles OFDM respectivement comme les valeurs respectives $\tilde{\alpha}T_e$ et $\tilde{\beta}T_e$ qui réalisent ledit maximum de la fonction de discrimination.

16. Méthode de détermination selon l'une des revendications précédentes, **caractérisée en ce que** le signal reçu est d'abord soumis à une étape de filtrage pour éliminer au moins une raie interférente avant le calcul de ladite pluralité de coefficients de corrélation cyclique.

**Claims**

1. Method for determining at least one characteristic of an OFDM signal within a received signal, **characterised in that**:

- a plurality of cyclic correlation coefficients ($\rho^{k/(\alpha+\beta)}(\alpha)$) for the received signal is calculated (420, 520) for a correlation time difference ($\alpha$) and a plurality of cyclic frequencies $\left(\dfrac{k}{\alpha+\beta}\right)$ ;

- a discrimination function is calculated (430, 530) as a sum of the squares of said cyclic correlation coefficients;
- said OFDM signal characteristic is deduced (440, 561, 562) as a function of at least one value of said discrimination function.

2. Determination method according to claim 1, **characterised in that** the discrimination function is calculated using the following equation:

$$J\left(\widetilde{\alpha},\widetilde{\beta}\right)=\sum_{k=0}^{K-1}\left|\frac{1}{U}\sum_{u=0}^{U-1}s(u)s^{*}\left(u-\widetilde{\alpha}\right)e^{-2i\pi\frac{k}{\widetilde{\alpha}+\widetilde{\beta}}}\right|^{2}$$

where $s(u)$, $u = 1,..,U$ are samples of the received signal, sampled at the sampling period $T_e$, $\widetilde{\alpha}$ is said time difference expressed in sampling period(s), $\widetilde{\beta}$ is a cyclic prefix duration expressed in sampling period(s), the summation on $k$ being taken on said plurality of cyclic frequencies.

3. Determination method according to claim 1, **characterised in that** the discrimination function is calculated using the following equation:

$$J\left(\widetilde{\alpha},\widetilde{\beta}\right)=\sum_{k=0}^{K-1}\left|\frac{1}{U}\sum_{u=0}^{U-1}s^{*}(u)s\left(u+\widetilde{\alpha}\right)e^{-2i\pi\frac{k}{\widetilde{\alpha}+\widetilde{\beta}}}\right|^{2}$$

where $s(u)$, $u = 1,..,U$ are samples of the received signal, sampled at the sampling period $T_e$, $\widetilde{\alpha}$ is said time difference expressed in sampling period(s), $\widetilde{\beta}$ is a cyclic prefix duration expressed in sampling period(s), the summation on $k$ being taken on said plurality of cyclic frequencies.

4. Determination method according to one of the previous claims, **characterised in that** said characteristic is the absence/presence information of said OFDM signal.

5. Determination method according to claim 2 or 3 and claim 4, **characterised in that** the useful duration and the cyclic prefix duration of OFDM symbols in the OFDM signal are known a priori, the discrimination function is calculated for the value of $\widetilde{\alpha}$ equal to said known useful duration and the value of $\widetilde{\beta}$ is equal to said known value of the prefix duration, expressed in sampling period(s).

6. Determination method according to claim 2 or 3 and claim 4, **characterised in that** the discrimination function calculated for a set of possible discrete values of $\widetilde{\alpha}$ and/or $\widetilde{\beta}$.

7. Determination method according to claim 2 or 3 and claim 4, **characterised in that** the discrimination function is calculated for an interval of values of $\widetilde{\alpha}$ and/or $\widetilde{\beta}$.

8. Determination method according to claim 5, **characterised in that** said value of the discrimination function is compared with a predetermined threshold value, and it is then concluded that there is an OFDM signal present if it exceeds the threshold value, and otherwise that there is no OFDM signal.

9. Determination method according to claim 6 or 7, **characterised in that** the maximum of the discrimination function thus calculated is determined, this maximum is compared with a predetermined threshold value and it is then concluded that an OFDM signal is present if this maximum exceeds the threshold value, and otherwise that there is no OFDM signal.

10. Determination method according to claim 8 or 9, **characterised in that** the predetermined threshold value is calculated as a function of the $\dfrac{U}{\sigma^4}$ ratio where $K$ is the number of cyclic frequencies and $\sigma^2 = \dfrac{1}{U}\sum\limits_{u=0}^{U-1}|x(u)|^2$ .

11. Determination method according to one of claims 1 to 3, **characterised in that** said characteristic is a time parameter of the OFDM signal.

12. Determination method according to claim 11, **characterised in that** said time parameter is the useful length, the cyclic prefix length or the total length of the OFDM symbols of said OFDM signal.

13. Determination method according to claim 2 or 3 and claim 12, **characterised in that** the maximum of the discrimination function is calculated for a plurality of possible discrete values of $\tilde{\alpha}$ and/or $\tilde{\beta}$.

14. Determination method according to claim 2 or 3 and claim 12, **characterised in that** the maximum of the discrimination function is calculated for an interval of values of $\tilde{\alpha}$ and/or $\tilde{\beta}$.

15. Determination method according to claim 13 or 14, **characterised in that** the useful length and the prefix length of the OFDM symbols are estimated jointly as the values $\tilde{\alpha}T_e$ and $\tilde{\beta}T_e$ respectively that achieve said maximum of the discrimination function.

16. Determination method according to any of the preceding claims, **characterised in that** the received signal is first submitted to a filtering step for removing at least one interfering spectral line before calculating said plurality of cyclic correlation coefficients.

**Patentansprüche**

1. Verfahren zur Bestimmung wenigstens einer Eigenschaft eines OFDM-Signals in einem empfangenen Signal, wobei man eine Mehrzahl von Koeffizienten einer zyklischen Korrelation des empfangenen Signals für einen zeitlichen Korrelationsabstand und eine Mehrzahl von zyklischen Frequenzen berechnet (420, 520), **dadurch gekennzeichnet, dass**:

   - man eine Unterscheidungsfunktion gleich der quadratischen Summe der Koeffizienten der zyklischen Korrelation berechnet (430, 530);
   - man die Eigenschaft des OFDM-Signals als Funktion wenigstens eines Werts der Unterscheidungsfunktion ableitet.

2. Verfahren zur Bestimmung nach Anspruch 1, **dadurch gekennzeichnet, dass** die Unterscheidungsfunktion gemäß dem folgenden Ausdruck berechnet wird:

$$J(\tilde{\alpha},\tilde{\beta}) = \sum_{k=0}^{K-1}\left|\frac{1}{U}\sum_{u=0}^{U-1}s(u)s^*(u-\tilde{\alpha})e^{-2i\pi\frac{k}{\tilde{\alpha}+\tilde{\beta}}}\right|^2$$

wobei $s(u)$, $u=1, ..., U$ Abtastwerte des empfangenen Signals sind, die mit der Abtastperiode $T_e$ abgetastet sind, $\tilde{\alpha}$

der zeitliche Abstand ist, ausgedrückt in Abtastperiode(n), $\tilde{\beta}$ eine zyklische Präfixdauer ist, ausgedrückt in Abtastperiode(n), und wobei die Summation über *k* über die Mehrzahl von zyklischen Frequenzen erfolgt.

3. Verfahren zur Bestimmung nach Anspruch 1, **dadurch gekennzeichnet, dass** die Unterscheidungsfunktion gemäß dem folgenden Ausdruck berechnet wird:

$$J(\tilde{\alpha}, \tilde{\beta}) = \sum_{k=0}^{K-1} \left| \frac{1}{U} \sum_{u=0}^{U-1} s^*(u)s(u+\tilde{\alpha})e^{-2i\pi\frac{k}{\tilde{\alpha}+\tilde{\beta}}} \right|^2$$

wobei s(u), $u=1, ..., U$ Abtastwerte des empfangenen Signals sind, die mit der Abtastperiode $T_e$ abgetastet sind, $\tilde{\alpha}$ der zeitliche Abstand ist, ausgedrückt in Abtastperiode(n), $\tilde{\beta}$ eine zyklische Präfixdauer ist, ausgedrückt in Abtastperiode(n), und wobei die Summation über *k* über die Mehrzahl von zyklischen Frequenzen erfolgt.

4. Verfahren zur Bestimmung nach einem der vorhergehenden Ansprüche, **dadurch gekennzeichnet, dass** die Eigenschaft die Information über das Fehlen/Vorhandensein des OFDM-Signals ist.

5. Verfahren zur Bestimmung nach Anspruch 2 oder 3 und nach Anspruch 4, **dadurch gekennzeichnet, dass** wenn die Nutzdauer und die zyklische Präfixdauer der OFDM-Symbole des OFDM-Signals a priori bekannt sind, die Unterscheidungsfunktion berechnet wird für den Wert von $\tilde{\alpha}$ gleich der bekannten Nutzdauer und den Wert von $\tilde{\beta}$ gleich dem bekannten Wert der Präfixdauer, ausgedrückt in Abtastperiode(n).

6. Verfahren zur Bestimmung nach Anspruch 2 oder 3 und nach Anspruch 4, **dadurch gekennzeichnet, dass** die Unterscheidungsfunktion für eine Gruppe von möglichen diskreten Werten von $\tilde{\alpha}$ und/oder von $\tilde{\beta}$ berechnet wird.

7. Verfahren zur Bestimmung nach Anspruch 2 oder 3 und nach Anspruch 4, **dadurch gekennzeichnet, dass** die Unterscheidungsfunktion für ein Intervall von Werten von $\tilde{\alpha}$ und/oder von $\tilde{\beta}$ berechnet wird.

8. Verfahren zur Bestimmung nach Anspruch 5, **dadurch gekennzeichnet, dass** man den Wert der Unterscheidungsfunktion mit einem vorbestimmten Schwellenwert vergleicht, und dass man auf das Vorhandensein eines OFDM-Signafs schließt, wenn er den Schwellenwert übersteigt, und andernfalls auf das Fehlen des OFDM-Signals.

9. Verfahren zur Bestimmung nach einem der Ansprüche 6 bis 7, **dadurch gekennzeichnet, dass** man das Maximum der derart berechneten Unterscheidungsfunktion bestimmt, dass man dieses Maximum mit einem vorbestimmten Schwellenwert vergleicht, und dass man auf das Vorhandensein eines OFDM-Signals schließt, wenn dieses Maximum den Schwellenwert übersteigt, und andernfalls auf das Fehlen des OFDM-Signals.

10. Verfahren zur Bestimmung nach Anspruch 8 oder 9, **dadurch gekennzeichnet, dass** der vorbestimmte Schwellenwert als Funktion des Verhältnisses $\dfrac{U}{\sigma^4}$ berechnet wird, wobei K die Zahl zyklischer Frequenzen ist und

$$\sigma^2 = \frac{1}{U} \sum_{u=0}^{U-1} |x(u)|^2 .$$

11. Verfahren zur Bestimmung nach einem der Ansprüche 1 bis 3, **dadurch gekennzeichnet, dass** die Eigenschaft ein zeitlicher Parameter des OFDM-Signals ist.

12. Verfahren zur Bestimmung nach Anspruch 11, **dadurch gekennzeichnet, dass** der zeitliche Parameter die Nutzlänge, die zyklische Präfixlänge oder die Gesamtlänge der OFDM-Symbole des OFDM-Signals ist.

**13.** Verfahren zur Bestimmung nach Anspruch 2 oder 3 und nach Anspruch 12, **dadurch gekennzeichnet, dass** man das Maximum der Unterscheidungsfunktion für eine Mehrzahl von möglichen diskreten Werten von $\tilde{\alpha}$ und/oder von $\tilde{\beta}$ berechnet.

**14.** Verfahren zur Bestimmung nach Anspruch 2 oder 3 und nach Anspruch 12, **dadurch gekennzeichnet, dass** man das Maximum der Unterscheidungsfunktion für ein Intervall von Werten von $\tilde{\alpha}$ und/oder von $\tilde{\beta}$ berechnet.

**15.** Verfahren zur Bestimmung nach Anspruch 13 oder 14, **dadurch gekennzeichnet, dass** man gemeinsam die Nutzlänge und die Präfixlänge der OFDM-Symbole als die jeweiligen Werte $\tilde{\alpha}T_e$ bzw. $\tilde{\beta}T_e$ bestimmt, die das Maximum der Unterscheidungsfunktion realisieren.

**16.** Verfahren zur Bestimmung nach einem der vorhergehenden Ansprüche, **dadurch gekennzeichnet, dass** das empfangene Signal zuerst einem Filterungsschritt unterzogen wird, um wenigstens eine Interferenzlinie zu eliminieren, bevor die Mehrzahl von Koeffizienten der zyklischen Korrelation berechnet wird.

$$T_{prefix} = DT_c \qquad T_u = NT_c \qquad T_{prefix} = DT_c \qquad T_u = NT_c$$

$$T_s = (N + D)T_c \qquad\qquad T_s = (N + D)T_c$$

**Fig. 1**

**Fig. 2**

**Fig. 3**

$s$

$$T_e \downarrow \qquad \text{—410}$$

$\{s(u)\}_u$

$$\rho^{k/(\tilde{\alpha}+\tilde{\beta})}(\tilde{\alpha}) \qquad \text{—420}$$

$$J(\tilde{\alpha},\tilde{\beta}) = \sum_{k=0}^{K-1} \left| \rho_a^{k/(\tilde{\alpha}+\tilde{\beta})}(\tilde{\alpha}) \right|^2 \qquad \text{—430}$$

$$(\hat{\alpha},\hat{\beta}) = \arg\max_{\tilde{\alpha},\tilde{\beta}} \left( J(\tilde{\alpha},\tilde{\beta}) \right) \qquad \text{—440}$$

**Fig. 4**

$s$

$T_e \quad \downarrow$ 510

$\{s(u)\}_u$

$\rho^{k/(\tilde{\alpha}+\tilde{\beta})}(\tilde{\alpha})$ 520

$$J(\tilde{\alpha}, \tilde{\beta}) = \sum_{k=0}^{K-1} \left| \rho_a^{k/(\tilde{\alpha}+\tilde{\beta})}(\tilde{\alpha}) \right|^2$$ 530

$$J = \max_{\tilde{\alpha}, \tilde{\beta}} J(\tilde{\alpha}, \tilde{\beta})$$ 540

550

N                                                    Y

$J \geq J_0$

561                                                    562

OFDM signal
not detected

OFDM signal
present

**Fig. 5**

## RÉFÉRENCES CITÉES DANS LA DESCRIPTION

**Littérature non-brevet citée dans la description**

- **J. MITOLA.** Cognitive radio : an integrated agent architecture for software defined radio. *Royal Institute of Technology,* 08 Mai 2000
- **C. CORDEIRO et al.** IEEE 802.22 : an introduction to the first wireless standard base on cognitive radios. *Journal of Communications,* Avril 2006, vol. 1 (1), 38-47
- **H. ISHII et al.** OFDM blind parameter indentification in cognitive radios. *PIRMC 2005, IEEE 16th International Symposium on Personal, Indoor and Mobile Communications,* 2005, 700-705

- **P. Liu et al.** A blind time-parameters estimation scheme for OFDM in multi-path channel. *Proc. 2005 Int'l Conférence on Wireless Communications Networking and Mobile Computing,* 23 Septembre 2005, vol. 1, 222-227
- **A. Walter et al.** OFDM parameters estimation, a time approach. *Conference Record of the 34 Asilomar Conference, Signals, Systems and Computers,* 29 Octobre 2000, 142-146
- **P. Jallon et al.** Second order based cyclic frequency estimates : the case of digital communication signals. *Proc. of ICASSP 2006 IEEE Conf.,* 14 Mai 2006, 339-392